# EUROPEAN PATENT APPLICATION

(11) **EP 2 674 933 A1**
(43) Date of publication of application: **18.12.2013**
(21) Application number: 11858375.6
(22) Date of filing: 10.02.2011
(51) Int. Cl.: G09G 3/02, G02B 26/10, H04N 9/31, H04N 17/04

(54) **IMAGE DISPLAY DEVICE**

(71) Applicant: Pioneer Solutions Corporation, Kawasaki-shi, Kanagawa 212-0031 (JP)
(72) Inventor: MIZOGUCHI, Takashi, Kawagoe-shi Saitama 350-8555 (JP); GE, Xiao Tang, Kawagoe-shi Saitama 350-8555 (JP); SHIMOSAWA, Ryosuke, Kawagoe-shi Saitama 350-8555 (JP)
(74) Representative: Haley, Stephen
(86) International application number: PCT/JP2011/052874
(87) International publication number: WO 2012/108032

(57) **Abstract**

An image displaying device includes: at least two laser light source units which emit at least two laser lights having different wavelengths from each other; a scanning unit which scans the laser lights emitted from the laser light source units; a light receiving element which receives each of the at least two laser lights; and a detecting unit which obtains an output of the light receiving element when the said light receiving element receives a laser light in the at least two laser, by making the scanning unit scan the said laser light, and thereby obtains outputs as to all of the at least two laser lights; wherein the light receiving element has a side extending in a scanning direction of the scanning unit, and wherein the detecting unit detects an optical axis shift in a direction perpendicular to the scanning direction, based on an output value from the light receiving element when each of the at least two laser lights passes through the side extending in thescanningdirection. Therefore, when the scanning unit performs a normal scanning, it is possible to appropriately detect the optical axis shift in a vertical direction.

## Description

### Technical Field

The present invention relates to a technical field for detecting an optical axis shift in an image displaying device.

### Background Technique

This kind of technique is proposed in Patent Reference-1, for example. In Patent Reference-1, there is proposed an image displaying device having multiple light sources which controls of switching first and second light sources on and off, and which detects a difference between optical axes of the first and second light sources based on receiving timing of a first light in a second light receiving area and receiving timing of a second light in the second light receiving area.

### PRIOR ART REFERENCE

### PATENT REFERENCE

Patent Reference-1: Japanese Patent Application Laid-open under No. 2010-20087

### SUMMARY OF INVENTION

### PROBLEM TO BE SOLVED BY THE INVENTION

However, by the technique described in Patent Reference-1, it is difficult to appropriately detect the optical axis shift during a normal drawing of the image displaying device. Concretely, since a raster scanning method performs a scanning by driving a scanning mirror in a horizontal direction, it is necessary that the technique described in Patent Reference-1 drives the scanning mirror in a vertical direction in order to detect the optical axis shift in the vertical direction.

The present invention has been achieved in order to solve the above problem. It is an object of the present invention to provide an image displaying device capable of appropriately detecting an optical axis shift in a vertical direction during a normal drawing.

### MEANS FOR SOLVING THE PROBLEM

In the invention according to claim 1, an image displaying device includes: at least two laser light source units which emit at least two laser lights having different wavelengths from each other; a scanning unit which scans the laser lights emitted from the laser light source units; a light receiving element which receives each of the at least two laser lights; and a detecting unit which obtains an output of the light receiving element when the said light receiving element receives a laser light in the at least two laser, by making the scanning unit scan the said laser light, and thereby obtains outputs as to all of the at least two laser lights; wherein the light receiving element has a side extending in a scanning direction of the scanning unit, and wherein the detecting unit detects an optical axis shift in a direction perpendicular to the scanning direction, based on an output value from the light receiving element when each of the at least two laser lights passes through the side extending in the scanning direction.

In the invention according to claim 4, an image displaying device includes: at least two laser light source units which emit at least two laser lights having different wavelengths from each other; a scanning unit which scans the laser lights emitted from the laser light source units; a light receiving element which receives each of the at least two laser lights; and a detecting unit which obtains an output of the light receiving element when the said light receiving element receives a laser light in the at least two laser, by making the scanning unit scan the said laser light, and thereby obtains outputs as to all of the at least two laser lights; wherein the light receiving element is formed in such a shape that an area of a spot of the laser light with which the light receiving element is irradiated changes in accordance with a progress of scanning by the scanning unit, and wherein the detecting unit detects an optical axis shift in a direction perpendicular to a scanning direction of the scanning unit, based on a change of an output from the light receiving element when each of the at least two laser lights passes through the light receiving element.

In the invention according to claim 12, an image displaying device includes: a first light source which emits a first laser light; a second light source which emits a second laser light having a different wavelength from the first laser light; a scanning unit which scans the first laser light and second laser light; a light receiving element which has a side extending in a scanning direction for scanning the first laser light and second laser light by the scanning unit, and receives each of the first laser light and second laser light so as to output a signal in accordance with amount of a received light; and an optical axis shift detecting unit which detects an optical axis shift in a direction perpendicular to the scanning direction, based on an output value from the light receiving element when each of the first laser light and second laser light passes along the side of the light receiving element which extends in the scanning direction.

In the invention according to claim 15, an image displaying device includes: a first light source which emits a first laser light; a second light source which emits a second laser light having a different wavelength from the first laser light; a scanning unit which scans the first laser light and second laser light; a light receiving element which has such a shape that an area of a spot formed on a light receiving surface by the first laser light and the second laser light changes in accordance with a progress of scanning in a predetermined direction by the scanning unit, and receives each of the first laser light and second laser light so as to output a signal in accordance with amount of a received light; and an optical axis shift detecting unit which detects an optical axis shift in a direction perpendicular to a scanning direction, based on an output value from the light receiving element when each of the first laser light and second laser light passes along a side of the light receiving element which extends in the scanning direction.

In the invention according to claim 17, an image displaying device includes: a first light source which emits a first laser light; a second light source which emits a second laser light having a different wavelength from the first laser light; a scanning unit which scans the first laser light and second laser light in a predetermined direction multiple times; a light receiving element which receives each of the first laser light and second laser light so as to output a signal in accordance with amount of a received light; and an optical axis shift detecting unit which detects an optical axis shift in a direction perpendicular to a scanning direction, based on a difference between an output value from the light receiving element at the time of the n-th scanning of the first laser light and an output value from the light receiving element at the time of the n-th scanning of the second laser light.

### BRIEF DESCRIPTION OF THE DRAWINGS

FIG. 1 shows a configuration of an image displaying device according to an embodiment.
FIG. 2 shows an arrangement example of a microlens array and a light receiving element.
FIG. 3 shows a diagram for explaining a basic concept of a method for detecting an optical axis shift in an embodiment.
FIGS. 4A to 4C show diagrams for explaining a method for detecting an optical axis shift according to a first embodiment.
FIGS. 5A to 5C show output waveforms of a light receiving element when a control according to a first embodiment is performed.
FIGS. 6A to 6C show diagrams for explaining a method for detecting an optical axis shift according to a second embodiment.
FIGS. 7A to 7C show output waveforms of a light receiving element when a control according to a second embodiment is performed.
FIGS. 8A to 8C show modified examples of a light receiving element according to a second embodiment.
FIGS. 9A to 9C show diagrams for explaining a method for detecting an optical axis shift according to a third embodiment.
FIGS. 10A to 10C show output waveforms of a light receiving element when a control according to a third embodiment is performed.
FIGS. 11A and 11B show modified examples of a light receiving element according to a third embodiment.

### MODE TO EXERCISE THE INVENTION

According to one aspect of the present invention, there is provided an image displaying device, including: at least two laser light source units which emit at least two laser lights having different wavelengths from each other; a scanning unit which scans the laser lights emitted from the laser light source units; a light receiving element which receives each of the at least two laser lights; and a detecting unit which obtains an output of the light receiving element when the said light receiving element receives a laser light in the at least two laser, by making the scanning unit scan the said laser light, and thereby obtains outputs as to all of the at least two laser lights; wherein the light receiving element has a side extending in a scanning direction of the scanning unit, and wherein the detecting unit detects an optical axis shift in a direction perpendicular to the scanning direction, based on an output value from the light receiving element when each of the at least two laser lights passes through the side extending in the scanning direction.

The above image displaying device includes the at least two laser light source units which emit the at least two laser lights having the different wavelengths from each other, the scanning unit which scans the laser lights emitted from the laser light source units and the light receiving element which receives each of the at least two laser lights. The detecting unit obtains the output when the light receiving element receives only one laser light, and thereby obtains the outputs as to all of the at least two laser lights. Then, the detecting unit detects the optical axis shift as to the at least two laser light source units. Concretely, the light receiving element has at least the side extending in the scanning direction, and the detecting unit detects the optical axis shift in the direction perpendicular to the scanning direction, based on the output value from the light receiving element when each of the at least two laser lights passes through the side extending in the scanning direction. Therefore, when the scanning unit performs the normal scanning, it is possible to appropriately detect the optical axis shift in the vertical direction. For example, it is not necessary to scan the laser light in a direction perpendicular to the normal scanning direction in order to detect the optical axis shift in the vertical direction.

In one mode of the above image displaying device, the detecting unit normalizes the output value from the light receiving element when each of the at least two laser lights passes through the side extending in the scanning direction, by a maximum value of the output value obtained when the light receiving element receives each of the at least two laser lights, and then detects the optical axis shift in the direction perpendicular to the scanning direction based on a normalized value.

According to the above mode, it is possible to suppress an influence by a difference in a laser power of each laser light. Therefore, it is possible to detect the optical axis shift in the vertical direction with accuracy.

In a preferred example of the above image displaying device, the light receiving element can be formed in a rectangular shape.

According to another aspect of the present invention, there is provided an image displaying device, including: at least two laser light source units which emit at least two laser lights having different wavelengths from each other; a scanning unit which scans the laser lights emitted from the laser light source units; a light receiving element which receives each of the at least two laser lights; and a detecting unit which obtains an output of the light receiving element when the said light receiving element receives a laser light in the at least two laser, by making the scanning unit scan the said laser light, and thereby obtains outputs as to all of the at least two laser lights; wherein the light receiving element is formed in such a shape that an area of a spot of the laser light with which the light receiving element is irradiated changes in accordance with a progress of scanning by the scanning unit, and wherein the detecting unit detects an optical axis shift in a direction perpendicular to a scanning direction of the scanning unit, based on a change of an output from the light receiving element when each of the at least two laser lights passes through the light receiving element.

As for the above image displaying device, the light receiving element is formed in such a shape that the area of the spot of the laser light with which the light receiving element is irradiated changes in accordance with the progress of scanning by the scanning unit. Additionally, the detecting unit detects the optical axis shift in the direction perpendicular to the scanning direction of the scanning unit, based on the change of the output from the light receiving element when each of the at least two laser lights passes through the light receiving element. Therefore, when the scanning unit performs the normal scanning, it is possible to appropriately detect the optical axis shift in the vertical direction. For example, it is not necessary to scan the laser light in a direction perpendicular to the normal scanning direction in order to detect the optical axis shift in the vertical direction.

In one mode of the above image displaying device, the light receiving element includes a side having a predetermined tilt with respect to the scanning direction, and the detecting unit detects the optical axis shift in the direction perpendicular to the scanning direction, based on timing at which an output indicating that each of the at least two laser lights passes through the side having the predetermined tilt is obtained from the light receiving element.

In the above mode, the detecting unit detects the optical axis shift in the direction perpendicular to the scanning direction, based on the timing at which the output indicating that each of the at least two laser lights passes through the side having the predetermined tilt is obtained from the light receiving element. When the above side having the predetermined tilt is used, a manner of a decrease in the output of the light receiving element when the laser light passes through the side tends to be substantially constant regardless of the spot size of each laser light. Therefore, it is possible to suppress an influence by a difference in the spot size of each laser light. Hence, it becomes possible to detect the optical axis shift in the vertical direction with accuracy.

In a preferred example of the above image displaying device, the detecting unit uses timing at which a output value of the light receiving element becomes a predetermined value when each of the at least two laser lights passes through the light receiving element, as the timing at which the output indicating that each of the at least two laser lights passes through the side having the predetermined tilt is obtained from the light receiving element, and the detecting unit detects the optical axis shift in the direction perpendicular to the scanning direction, based on the predetermined tilt and the timing at which the output value of the light receiving element becomes the predetermined value.

In another mode of the above image displaying device, the light receiving element is formed in such a shape that multiple rectangles being at least larger than spots of the at least two laser lights are arranged in a staircase pattern, and the detecting unit detects the optical axis shift in the direction perpendicular to the scanning direction, based on timing at which a output value of the light receiving element becomes larger than or equal to a predetermined value when each of the at least two laser lights passes through the light receiving element.

In the above mode, the light receiving element is formed in such a shape that the multiple rectangles being at least larger than the spots of the at least two laser lights are arranged in the staircase pattern. Additionally, the detecting unit detects the optical axis shift in the direction perpendicular to the scanning direction, based on the timing at which the output value of the light receiving element becomes larger than or equal to the predetermined value when each of the at least two laser lights passes through the light receiving element. Therefore, by only executing a processing for specifying such a rectangle that the area of the spot of each laser light which is located in the rectangle becomes a maximum in the multiple rectangles, for example, it is possible to roughly detect the optical axis shift in the vertical direction based on the output change of the light receiving element. Hence, it becomes possible to detect the optical axis shift in the vertical direction by the relatively simple processing.

In another mode of the above image displaying device, the light receiving element is provided at a position corresponding to a predetermined area which is located in a scanning area by the scanning unit, and which is located outside a drawing area by the image displaying device.

By the above mode, it is possible to appropriately detect the optical axis shift in the vertical direction during the normal drawing by the image displaying device. The "drawing area" corresponds to an area in which an image presented to a user is displayed.

In another mode of the above image displaying device, the detecting unit further detects an optical axis shift in the scanning direction, based on timing at which an output indicating that each of the at least two laser lights passes through a side of the light receiving element which extends in a direction perpendicular to the scanning direction is obtained from the light receiving element. By the above mode, it is possible to appropriately detect not only the optical axis shift in the vertical direction but also the optical axis shift in the scanning direction (horizontal direction).

In a preferred example of the above image displaying device, before the optical axis shift is detected, the detecting unit obtains timing at which an output indicating that a laser light in the at least two laser lights passes through a side of the light receiving element which extends in a direction perpendicular to the scanning direction is obtained from the light receiving element, by making the scanning unit scan the said laser light, and the detecting unit detects the optical axis shift by using the obtained timing as a basis for comparing the output of the light receiving element which is obtained when each of the at least two laser lights passes through the light receiving element. By using the above timing as the basis, it is possible to appropriately align the output waveform of the light receiving element as to each laser light, on a temporal axis.

In another preferred example of the above image displaying device, the detecting unit detects the optical axis shift by using timing of start of a scanning by the scanning unit, as a basis for comparing the output of the light receiving element which is obtained when each of the at least two laser lights passes through the light receiving element. By using the timing as the basis, it is possible to appropriately align the output waveform of the light receiving element as to each laser light, on the temporal axis, too.

According to still another aspect of the present invention, there is provided an image displaying device, including: a first light source which emits a first laser light; a second light source which emits a second laser light having a different wavelength from the first laser light; a scanning unit which scans the first laser light and second laser light; a light receiving element which has a side extending in a scanning direction for scanning the first laser light and second laser light by the scanning unit, and receives each of the first laser light and second laser light so as to output a signal in accordance with amount of a received light; and an optical axis shift detecting unit which detects an optical axis shift in a direction perpendicular to the scanning direction, based on an output value from the light receiving element when each of the first laser light and second laser light passes along the side of the light receiving element which extends in the scanning direction.

In one mode of the above image displaying device, the optical axis shift detecting unit detects the optical axis shift based on an output value from the light receiving element in such a state that only a part of the first laser light or only a part of the second laser light is received by the light receiving element. Additionally, the optical axis shift detecting unit corresponds to an outermost periphery part of the light receiving element which is scanned by the first light source and the second light source.

According to still another aspect of the present invention, there is provided an image displaying device, including: a first light source which emits a first laser light; a second light source which emits a second laser light having a different wavelength from the first laser light; a scanning unit which scans the first laser light and second laser light; a light receiving element which has such a shape that an area of a spot formed on a light receiving surface by the first laser light and the second laser light changes in accordance with a progress of scanning in a predetermined direction by the scanning unit, and receives each of the first laser light and second laser light so as to output a signal in accordance with amount of a received light; and an optical axis shift detecting unit which detects an optical axis shift in a direction perpendicular to a scanning direction, based on an output value from the light receiving element when each of the first laser light and second laser light passes along a side of the light receiving element which extends in the scanning direction.

In one mode of the above image displaying device, the optical axis shift detecting unit corresponds to an outermost periphery part of the light receiving element which is scanned by the first light source and the second light source.

According to still another aspect of the present invention, there is provided an image displaying device, including: a first light source which emits a first laser light; a second light source which emits a second laser light having a different wavelength from the first laser light; a scanning unit which scans the first laser light and second laser light in a predetermined direction multiple times; a light receiving element which receives each of the first laser light and second laser light so as to output a signal in accordance with amount of a received light; and an optical axis shift detecting unit which detects an optical axis shift in a direction perpendicular to a scanning direction, based on a difference between an output value from the light receiving element at the time of the n-th scanning of the first laser light and an output value from the light receiving element at the time of the n-th scanning of the second laser light.

### EMBODIMENT

Preferred embodiments of the present invention will be explained hereinafter with reference to the drawings.

### [Configuration of Image Displaying Device]

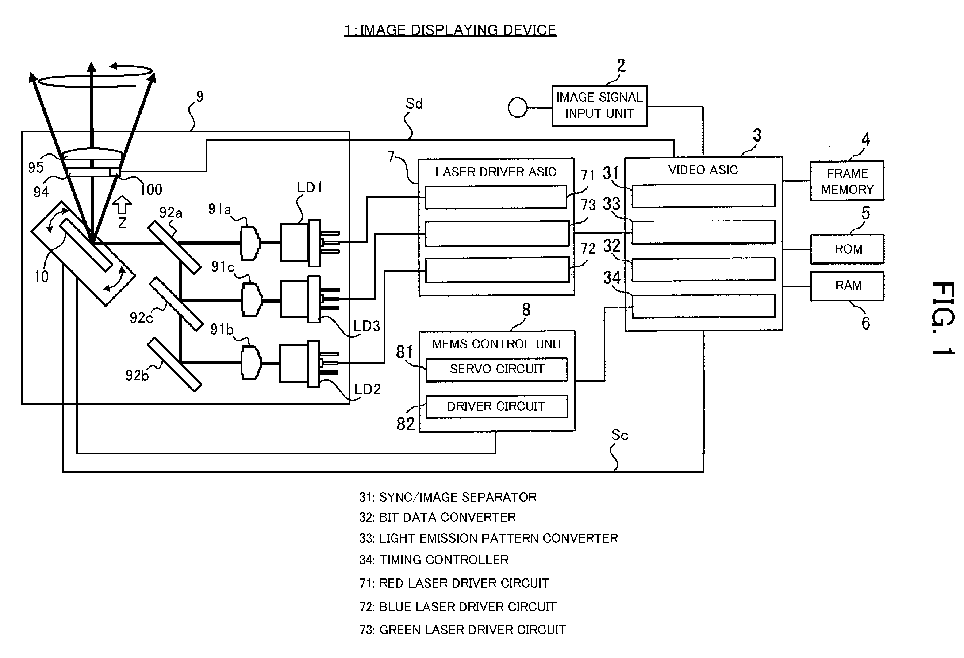

FIG. 1 shows a configuration of an image displaying device according to an embodiment. As shown in FIG. 1, the image displaying device 1 includes an image signal input unit 2, a video ASIC 3, a frame memory 4, a ROM 5, a RAM 6, a laser driver ASIC 7, a MEMS control unit 8, a laser light source unit 9. For example, the image displaying unit 1 is applied to a head-up display.

The image signal input unit 2 receives the image signal from the outside and outputs the image signal to video ASIC 3.

The video ASIC 3 is formed as an ASIC (Application Specific Integrated Circuit) and controls the laser driver ASIC 7 and the MEMS control unit 8 based on the image signal inputted by the image signal input unit 2 and a scanning position information Sc inputted by the MEMS mirror 10. The video ASIC 3 includes a sync/image separator 31, a bit data converter 32, a light emission pattern converter 33 and a timing controller 34.

The sync/image separator 31 separates the image signal inputted by the image signal input unit 2 into a synchronous signal and image data displayed on an image displaying unit, and writes the image data into the frame memory 4.

The bit data converter 32 reads out the image data written into the frame memory 4, and converts the image data into bit data.

The light emission pattern converter 33 converts the bit data converted by the bit data converter 32 into a signal indicating a light emission pattern of each laser.

The timing controller 34 controls an operation timing of the sync/image separator 31 and the bit data converter 32. Additionally, the timing controller 34 also controls an operation timing of the MEMS control unit 8, described later.

The image data separated by the sync/image separator 31 is written into the frame memory 4. The ROM 5 stores a control program and data for operating the video ASIC 3. The RAM 6 is used as a working memory when the video ASIC 3 operates, and the video ASIC 3 sequentially reads and writes various data of the RAM 6.

The laser driver ASIC 7 is formed as an ASIC and generates a signal for driving laser diodes provided in the laser light source unit 9 which will be described later. The laser driver ASIC 7 includes a red laser driver circuit 71, a blue laser driver circuit 72 and a green laser driver circuit 73.

The red laser driver circuit 71 drives a red laser LD1 based on the signal outputted by the light emissionpattern converter 33. The blue laser driver circuit 72 drives a blue laser LD2 based on the signal outputted by the light emission pattern converter 33. The green laser driver circuit 73 drives a green laser LD3 based on the signal outputted by the light emissionpattern converter 33.

The MEMS control unit 8 controls the MEMS mirror 10 based on the signal outputted by the timing controller 34. The MEMS control unit 8 includes a servo circuit 81 and a driver circuit 82.

The servo circuit 81 controls the operation of the MEMS mirror 10 based on the signal from the timing controller 34.

The driver circuit 82 amplifies the control signal of the MEMS mirror 10, which is outputted by the servo circuit 81, to a predetermined level, and outputs the amplified signal.

The laser light source unit 9 emits the laser light based on the drive signal outputted by the laser driver ASIC 7. Concretely, the laser light source unit 9 mainly includes a red laser LD1, a blue laser LD2, a green laser LD3, collimator lenses 91a to 91c, reflective mirrors 92a to 92c, a microlens array 94, a lens 95 and a light receiving element 100.

The red laser LD1 emits the red laser light, and the blue laser LD2 emits the blue laser light, and the green laser LD3 emits the green laser light. The collimator lenses 91a to 91c convert the red, blue and green laser lights into parallel lights, respectively, and emit the parallel lights to the reflective mirrors 92a to 92c. The reflective mirror 92b reflects the blue laser light. The reflective mirror 92c transmits the blue laser light, and reflects the green laser light. Then, the reflective mirror 92a transmits only the red laser light, and reflects the blue and green laser lights. Thus, the red laser light transmitted by the reflective mirror 92a and the blue and green laser lights reflected by the reflective mirror 92a enter the MEMS mirror 10.

The MEMS mirror 10 functions as the scanning unit, and reflects the laser light from the reflective mirror 92a, to the microlens array 94. Basically, the MEMS mirror 10 operates to scan the microlens array 94 as a screen based on the control by the MEMS control unit 8 in order to display the image inputted to the image signal input unit 2, and outputs scanning position information (for example, information indicating an angle of the mirror) to the video ASIC 3. The laser light reflected by the MEMS mirror 10 enters the microlens array 94, on which multiple microlenses are arranged. The lens 95 expands the image formed on an emitting surface of the microlens array 94.

The light receiving element 100 is provided near the microlens array 94. Concretely, though the microlens array 94 is provided at a position corresponding to a drawing area (The drawing area corresponds to an area in which the image presented to the user is displayed. The same will apply hereinafter.), the light receiving element 100 is provided at a position corresponding to a predetermined area outside the drawing area. The light receiving element 100 is a photoelectric conversion element such as a photodetector, and supplies the video ASIC 3 with a detecting signal Sd being an electrical signal in accordance with the amount of the received laser light. The video ASIC 3 functions as the detecting unit (optical axis shift detecting unit), and detects the optical axis shift as to the red laser LD1, the blue laser LD2 and the green laser LD3, based on the detecting signal Sd from the light receiving element 100. Additionally, the video ASIC 3 performs a control for correcting the optical axis shift. As a matter of convenience of the explanations, FIG. 1 roughly shows the position of the light receiving element 100 with respect to the microlens array 94. However, actual position of the light receiving element 100 is different from the position shown in FIG. 1.

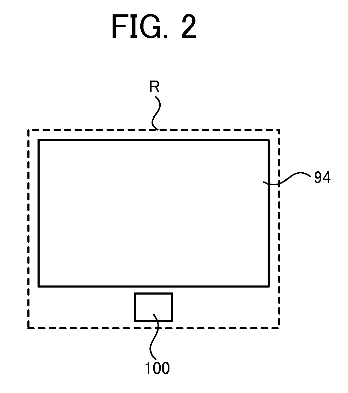

FIG. 2 is a diagram showing an arrangement example of the microlens array 94 and the light receiving element 100. FIG. 2 shows the diagram of the microlens array 94 and the light receiving element 100 which are observed in a direction (see an arrow Z in FIG. 1) along a traveling direction of the laser light. An area R drawn by a broken line corresponds to the scanning area by the MEMS mirror 10. In the area R corresponding to the scanning area, the microlens array 94 is provided at the position corresponding to the drawing area, and the light receiving element 100 is provided at the position corresponding to an area located below the drawing area.

It is not limited that the light receiving element 100 is provided at the position shown in FIG. 2. As long as the light receiving element 100 is provided at the position corresponding to an area in the scanning area which is located outside the drawing area, the light receiving element 100 can be provided at various positions.

### [Method for Detecting Optical Axis Shift]

Next, a description will be given a method for detecting an optical axis shift in the embodiment. The embodiment detects the optical axis shift as to the red laser LD1, the blue laser LD2 and the green laser LD3 during a normal operation of the image displaying device 1, by using the above light receiving element 100.

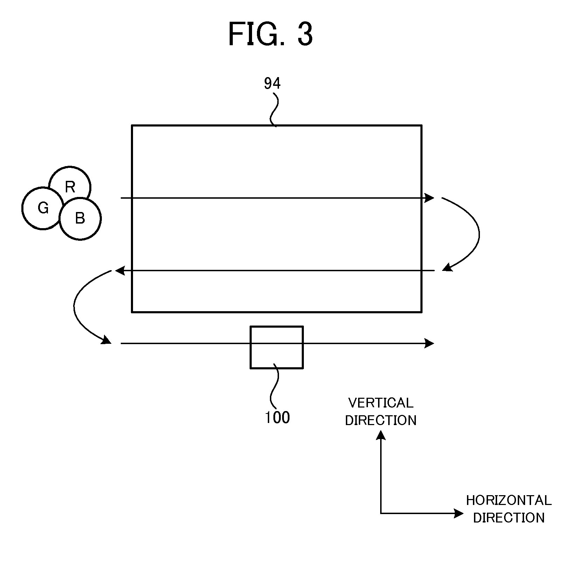

Concretely, as shown in FIG. 3, the embodiment detects the optical axis shift during a normal drawing of the image displaying device 1, by scanning the light receiving element 100 by the laser light. Namely, after the microlens array 94 provided at the position corresponding to the drawing area is scanned, the embodiment detects the optical axis shift based on the output of the light receiving element 100 when the light receiving element 100 provided at the position corresponding to the area outside the drawing area is scanned. It is not limited that the light receiving element 100 is scanned after the microlens array 94 is scanned. Depending on the position of the light receiving element 100, the light receiving element 100 may be scanned before the microlens array 94 is scanned. Additionally, though FIG. 3 shows the light receiving element 100 formed in a rectangular shape, the rectangular shape is one example of the shape of the light receiving element 100. As shown in the following embodiments, the light receiving element 100 is formed in various shapes.

In the specification, as shown in FIG. 3, a normal scanning direction of the laser light in the raster scanning method is defined as "horizontal direction", and a direction perpendicular to the said scanning direction is defined as "vertical direction". Additionally, in FIG. 3, circles in which "R", "G" and "B" are described represent the spots of the red, blue and green laser lights, respectively. FIG. 3 shows such an example that the spot of the blue laser light shifts to a right direction in the horizontal direction (The right direction is defined as "positive direction", and a direction opposite to the right direction is defined as "negative direction") with respect to the red laser light, and that the spot of the blue laser light shifts to a downward direction in the vertical direction (The downward direction is defined as "negative direction", and a direction opposite to the downward direction is defined as "positive direction") with respect to the red laser light. Additionally, the spot of the green laser light shifts to the negative direction in the horizontal direction with respect to the red laser light, and the spot of the green laser light shifts to the negative direction in the vertical direction with respect to the red laser light. The following embodiments show such an example that the optical axis shift as shown in FIG. 3 occurs.

Next, a description will be given of concrete embodiments (first to third embodiments) of the method for detecting the optical axis shift.

### (First Embodiment)

At first, a description will be given of a first embodiment. The first embodiment uses the light receiving element 100 (Hereinafter, the light receiving element 100 according to the first embodiment is referred to as "light receiving element 100a") which is formed in a rectangular shape, and detects the optical axis shift in the vertical direction based on a magnitude of an output value of the light receiving element 100a when each laser light passes through a side of the light receiving element 100a which extends in the scanning direction (The side corresponds to an outermost periphery part of the light receiving element 100a) .

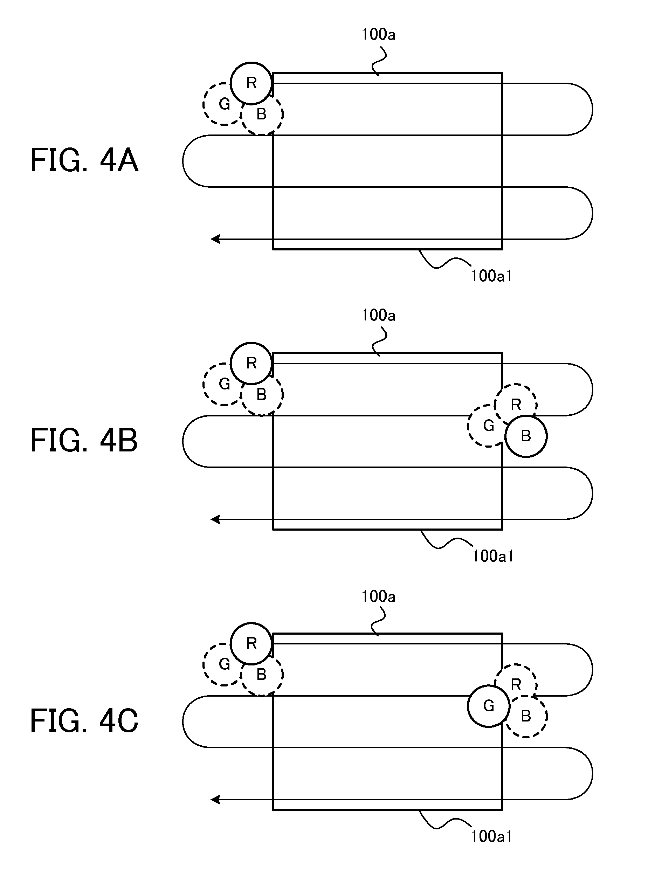

FIGS. 4A to 4C show diagrams for concretely explaining a method for detecting the optical axis shift according to the first embodiment. As shown in FIGS. 4A to4C, the light receiving element 100a is formed in a rectangular shape. Concretely, as for the vertical direction, the light receiving element 100a has such a length that the spot is appropriately placed inside when each laser light is scannedmultiple times (for example, four times) . It is assumed that the same optical axis shift as FIG. 3 occurs in the red, blue and green laser lights. In FIGS. 4A to4C, such a spot that the laser light is emitted is represented by a solid line, and such a spot that the laser light is not emitted is represented by a broken line. The same will apply hereinafter.

Firstly, as shown in FIG. 4A, in such a state that only the red laser light is emitted, the image displaying device 1 scans the red laser light so that the red laser light passes through the light receiving element 100a multiple times (for example, four times). In this case, when the red laser light finally passes through the light receiving element 100a, the red laser light is located on the negative side of the light receiving element 100a in the vertical direction, and passes through an edge (corresponding to a side 100a1) extending in the horizontal direction. Basically, when the red laser light passes through the side 100a1 of the light receiving element 100a, only a part of the spot of the red laser light is located in the light receiving element 100a, and the other part of the spot of the red laser light is protruded from the light receiving element 100a. In some cases, the entire spot of the red laser light is located in the light receiving element 100a, or the entire spot of the red laser light is protruded from the light receiving element 100a. Here, the MEMS control unit 8 in the image displaying device 1 performs the same scanning as the normal drawing. Concretely, the MEMS control unit 8 performs the scanning so that a clearance in the vertical direction within the scanning area does not occur. The same will apply hereinafter.

Next, as shown in FIG. 4B, the image displaying device 1 emits only the red laser light, and then switches the laser light to be emitted from the red laser light to the blue laser light after the red laser light finishes passing through the light receiving element 100a only once. Then, in such a state that only the blue laser light is emitted, the image displaying device 1 scans the blue laser light so that the blue laser light passes through the light receiving element 100amultiple times (for example, three times). Since the blue laser light shifts to the positive direction in the horizontal direction with respect to the red laser light, when the blue laser light is scanned in the negative direction, the blue laser light enters the light receiving element 100a after the red laser light enters the light receiving element 100a. Additionally, when the blue laser light finally passes through the light receiving element 100a, the blue laser light passes through the side 100a1 of the light receiving element 100a. Basically, when the blue laser light passes through the side 100a1 of the light receiving element 100a, only a part of the spot of the blue laser light is located in the light receiving element 100a, and the other part of the spot of the blue laser light is protruded from the light receiving element 100a. In some cases, the entire spot of the blue laser light is located in the light receiving element 100a, or the entire spot of the blue laser light is protruded from the light receiving element 100a.

Here, the blue laser light shifts to the negative direction in the vertical direction with respect to the red laser light. Therefore, when the laser light passes through the side 100a1 of the light receiving element 100a, there is a tendency that an area of the spot of the blue laser light which is located in the light receiving element 100a is smaller than an area of the spot of the red laser light which is located in the light receiving element 100a. Since the output value of the light receiving element 100a becomes a value in accordance with the area of the spot which is located in the light receiving element 100a, it is possible to detect a difference of the optical axis in the vertical direction between the red laser light and the blue laser light, by comparing the magnitude of the output value as to the red laser light with the magnitude of the output value as to the blue laser light.

Next, as shown in FIG. 4C, the image displaying device 1 emits only the red laser light, and then switches the laser light to be emitted from the red laser light to the green laser light after the red laser light finishes passing through the light receiving element 100a only once. Then, in such a state that only the green laser light is emitted, the image displaying device 1 scans the green laser light so that the green laser light passes through the light receiving element 100amultiple times (for example, three times). Since the green laser light shifts to the negative direction in the horizontal direction with respect to the red laser light, when the green laser light is scanned in the negative direction, the green laser light enters the light receiving element 100a before the red laser light enters the light receiving element 100a. Additionally, when the green laser light finally passes through the light receiving element 100a, the green laser light passes through the side 100a1 of the light receiving element 100a. Basically, when the green laser light passes through the side 100a1 of the light receiving element 100a, only a part of the spot of the green laser light is located in the light receiving element 100a, and the other part of the spot of the green laser light is protruded from the light receiving element 100a. In some cases, the entire spot of the green laser light is located in the light receiving element 100a, or the entire spot of the green laser light is protruded from the light receiving element 100a.

Here, the green laser light shifts to the negative direction in the vertical direction with respect to the red laser light. Therefore, when the laser light passes through the side 100a1 of the light receiving element 100a, there is a tendency that the area of the spot of the green laser light which is located in the light receiving element 100a is smaller than the area of the spot of the red laser light which is located in the light receiving element 100a. Since the output value of the light receiving element 100a becomes a value in accordance with the area of the spot which is located in the light receiving element 100a, it is possible to detect a difference of the optical axis in the vertical direction between the red laser light and the green laser light, by comparing the magnitude of the output value as to the red laser light with the magnitude of the output value as to the blue laser light.

The reason for scanning the red laser light to pass through the light receiving element 100a only once before the scanning of the blue and green laser lights (see FIGS. 4B and 4C) is that the first embodiment uses the output value of the light receiving element 100a when the red laser light passes through the light receiving element 100a as described above, as a basis. Concretely, the first embodiment uses timing at which the output indicating that the red laser light starts to pass through the light receiving element 100a is obtained from the light receiving element 100a, as basic time (i.e., absolute time). Namely, by using the basic time, the first embodiment aligns output waveforms obtained by the control as shown in FIGS. 4A to 4C on a temporal axis, in order to detect the optical axis shift. It is not limited to define the basic time by the output as to the red laser light. Instead of the red laser light, the basic time may be defined by the output as to the blue laser light or the green laser light.

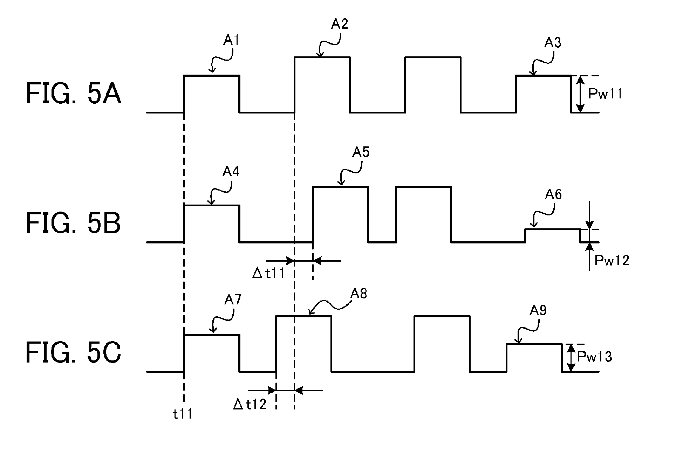

FIGS. 5A to 5C show output waveforms of the light receiving element 100a which are obtained by the control as shown in FIGS. 4A to 4C, respectively. In FIGS. 5A to 5C, a horizontal direction indicates time, and a vertical direction indicates an output value of the light receiving element 100a (corresponding to a power of the laser light which is detected by the light receiving element 100a). Additionally, by using basic time t11, the output waveforms obtained by the control as shown in FIGS. 4A to 4C are aligned on the temporal axis.

According to FIGS. 5A to 5C, the output of the light receiving element 100a in accordance with the multiple passes (for example, three passes) of the light receiving element 100a by the laser light is obtained. In FIG. 5A, an output of the light receiving element 100a shown by a reference numeral A1 indicates an output obtained when the red laser light firstly passes through the light receiving element 100a. The basic time T11 is applied to rising timing of the said output. An output of the light receiving element 100a shown by a reference numeral A2 indicates an output obtained when the red laser light passes through the light receiving element 100a the second time around. Additionally, an output value Pw11 of the light receiving element 100a shown by a reference numeral A3 indicates an output obtained when the red laser light passes through the side 100a1 of the light receiving element 100a. The output value Pw11 has a magnitude in accordance with the area of the spot of the red laser light which is located in the light receiving element 100a. Therefore, it is possible to determine the position of the red laser light in the vertical direction based on the magnitude of the output value Pw11.

In FIG. 5B, an output of the light receiving element 100a shown by a reference numeral A4 indicates an output obtained when the red laser light passes through the light receiving element 100a only once. The basic time T11 is applied to rising timing of the said output. An output of the light receiving element 100a shown by a reference numeral A5 indicates an output obtained when the blue laser light firstly passes through the light receiving element 100a after the switching of the laser light to be emitted from the red laser light to the blue laser light. Additionally, an output value Pw12 of the light receiving element 100a shown by a reference numeral A6 indicates an output obtained when the blue laser light passes through the side 100a1 of the light receiving element 100a. The output value Pw12 has a magnitude in accordance with the area of the spot of the blue laser light which is located in the light receiving element 100a. Therefore, it is possible to determine the position of the blue laser light in the vertical direction based on the magnitude of the output value Pw12.

In FIG. 5C, an output of the light receiving element 100a shown by a reference numeral A7 indicates an output obtained when the red laser light passes through the light receiving element 100a only once. The basic time T11 is applied to rising timing of the said output. An output of the light receiving element 100a shown by a reference numeral A8 indicates an output obtained when the green laser light firstly passes through the light receiving element 100a after the switching of the laser light to be emitted from the red laser light to the green laser light. Additionally, an output value Pw13 of the light receiving element 100a shown by a reference numeral A9 indicates an output obtained when the green laser light passes through the side 100a1 of the light receiving element 100a. The output value Pw13 has a magnitude in accordance with the area of the spot of the green laser light which is located in the light receiving element 100a. Therefore, it is possible to determine the position of the green laser light in the vertical direction based on the magnitude of the output value Pw13.

In the first embodiment, the video ASIC 3 in the image displaying device 1 uses a difference Δt11 in a temporal direction between the output A2 of the light receiving element 100a obtained by the red laser light and the output A5 of the light receiving element 100a obtained by the blue laser light, as a difference of the optical axis in the horizontal direction between the red laser light and the blue laser light. The above difference in the temporal direction corresponds to a difference of the rising timing of the output of the light receiving element 100a. The difference Δt11 in the temporal direction indicates that the output A5 as to the blue laser light is later than the output A2 as to the red laser light. In this case, the video ASIC 3 determines that the blue laser light shifts to the positive direction in the horizontal direction with respect to the red laser light. Similarly, the video ASIC 3 uses a difference Δt12 in the temporal direction between the output A2 of the light receiving element 100a obtained by the red laser light and the output A8 of the light receiving element 100a obtained by the green laser light, as a difference of the optical axis in the horizontal direction between the red laser light and the green laser light. The difference Δt12 in the temporal direction indicates that the output A8 as to the green laser light is earlier than the output A2 as to the red laser light. In this case, the video ASIC 3 determines that the green laser light shifts to the negative direction in the horizontal direction with respect to the red laser light.

It is not limited to directly use the differences Δt11 and Δt12 as the optical axis shift in the horizontal direction. For example, values obtained by converting the differences Δt11 and Δt12 into lengths (as an example, lengths defined by a spot size), or values obtained by converting the differences Δt11 and Δt12 into angles may be used as the optical axis shift in the horizontal direction.

Furthermore, in the first embodiment, the video ASIC 3 detects the optical axis shift in the vertical direction as to the red, blue and green laser lights, based on the magnitudes of the output values Pw11, Pw12 and Pw13 obtained when the laser light passes through the side 100a1 of the light receiving element 100a. Concretely, the video ASIC 3 uses a difference between the output value Pw11 as to the red laser light and the output value Pw12 as to the blue laser light, as a difference of the optical axis in the vertical direction between the red laser light and the blue laser light. In this case, since the output value Pw12 as to the blue laser light is smaller than the output value Pw11 as to the red laser light, the video ASIC 3 determines that the blue laser light shifts to the negative direction in the vertical direction with respect to the red laser light. Similarly, the video ASIC 3 uses a difference between the output value Pw11 as to the red laser light and the output value Pw13 as to the green laser light, as a difference of the optical axis in the vertical direction between the red laser light and the green laser light. In this case, since the output value Pw13 as to the blue laser light is smaller than the output value Pw11 as to the red laser light, the video ASIC 3 determines that the green laser light shifts to the negative direction in the vertical direction with respect to the red laser light.

Here, when the optical axis shift in the vertical direction is detected, it is preferable to normalize the output values Pw11, Pw12 and Pw13 obtained when the laser lights pass through the side 100a1 of the light receiving element 100a. Concretely, it is preferable to normalize the output values Pw11, Pw12 and Pw13 by maximal values of the output values obtained when the light receiving element 100a receives the red, blue and green laser lights, respectively, and to detect the optical axis shift in the vertical direction based on a difference in the normalized values. In this case, the video ASIC 3 normalizes the output value Pw11 as to the red laser light by the output value of the output A2, and normalizes the output value Pw12 as to the blue laser light by the output value of the output A5, and normalizes the output value Pw13 as to the green laser light by the output value of the output A8. Therefore, it is possible to appropriately consider a difference in the laser power between the red, blue and green laser lights. Hence, it becomes possible to detect the optical axis shift in the vertical direction with accuracy.

Additionally, it is not limited to directly use the difference in the output values Pw11, Pw12 and Pw13 (including the normalized values of the output values Pw11, Pw12 and Pw13) as the optical axis shift in the vertical direction. For example, a value obtained by converting the difference in the output values Pw11, Pw12 and Pw13 into time, an angle, or a length may be used as the optical axis shift in the vertical direction.

By the above first embodiment, it is possible to appropriately detect the optical axis shift in the vertical direction during the normal drawing by the image displaying device 1.

While the above first embodiment shows the light receiving element 100a formed in the rectangular shape, it is not limited to use the said light receiving element 100a. As long as a light receiving element has at least a side extending in the horizontal direction, the first embodiment can be applied to light receiving elements formed in various shapes.

Additionally, while the above first embodiment shows such an example that the optical axis shift is defined on the basis of the red laser light, the optical axis shift may be defined on the basis of the blue laser light or the green laser light. Furthermore, while the above first embodiment shows such an example that the said embodiment is applied to the case that the optical axis shift shown in FIG. 3 occurs, needless to say, it is not limited to apply the first embodiment to the said case.

### (Second Embodiment)

Next, a description will be given of a second embodiment. The second embodiment uses the light receiving element 100 (Hereinafter, the light receiving element 100 according to the second embodiment is referred to as "light receiving element 100b") which includes a side (edge) having a predetermined tilt with respect to the scanning direction, and detects the optical axis shift in the vertical direction based on an output change of the light receiving element 100b when each laser light passes through the light receiving element 100b. Concretely, the second embodiment detects the optical axis shift in the vertical direction based on the output of the light receiving element 100b which indicates that each laser light passes through the side having the predetermined tilt.

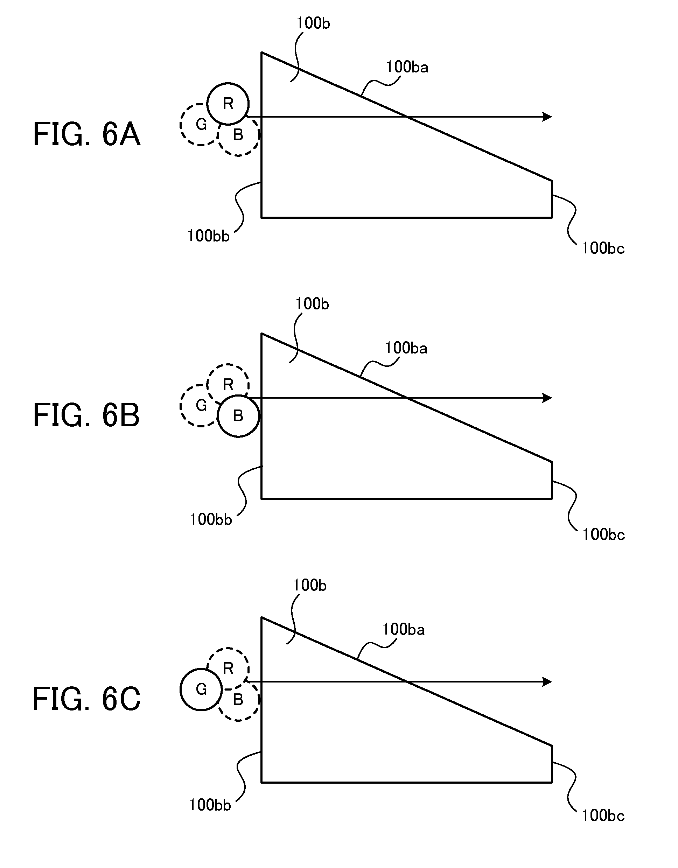

FIGS. 6A to 6C show diagrams for concretely explaining a method for detecting the optical axis shift according to the second embodiment. As shown in FIGS. 6A to 6C, the light receiving element 100b includes a side 100ba having the predetermined tilt with respect to the scanning direction (i.e., the side 100ba non-parallel to the scanning direction), and includes sides 100bb and 100bc which extend in the direction perpendicular to the scanning direction. Concretely, the sides 100ba and 100bb of the light receiving element 100b are configured so that the spot of each laser light certainly passes through the side 100ba even if the assumed optical axis shift in the vertical direction becomes a maximum. Additionally, the side 100ba has such a gradual tilt that the optical axis shift in the vertical direction can be appropriately detected. Furthermore, the light receiving element 100b is located at such a position that the laser light certainly passes through the side 100ba by the normal scanning of the laser light. As for the red, blue and green laser lights, it is assumed that the optical axis shifts as shown in FIG. 3 occur.

Firstly, as shown in FIG. 6A, in such a state that only the red laser light is emitted, the image displaying device 1 scans the red laser light so that the red laser light passes through the light receiving element 100b. Next, as shown in FIG. 6B, in such a state that only the blue laser light is emitted, the image displaying device 1 scans the blue laser light so that the blue laser light passes through the light receiving element 100b. Next, as shown in FIG. 6C, in such a state that only the green laser light is emitted, the image displaying device 1 scans the green laser light so that the green laser light passes through the light receiving element 100b. The MEMS control unit 8 in the image displaying device 1 performs the same scanning as the normal drawing.

Here, since the blue laser light shifts to the positive direction in the horizontal direction with respect to the red laser light, the blue laser light enters the light receiving element 100b before the red laser light enters the light receiving element 100b. Additionally, since the green laser light shifts to the negative direction in the horizontal direction with respect to the red laser light, the green laser light enters the light receiving element 100b after the red laser light enters the light receiving element 100b.

Meanwhile, since the side 100ba being located posterior to the side 100bb is inclined with respect to the scanning direction and the positions of the laser lights in the vertical direction are different from each other, timing at which the laser lights pass through the side 100ba is different from each other. In other words, time required for the laser lights to travel from the side 100bb to the side 100ba (i.e., time during which the laser lights is located in the light receiving element 100b) is different from each other. Concretely, since the blue laser light shifts to the negative direction in the vertical direction with respect to the red laser light, the time required for the blue laser light to travel from the side 100bb to the side 100ba is longer than the time required for the red laser light to travel from the side 100bb to the side 100ba. Similarly, since the green laser light shifts to the negative direction in the vertical direction with respect to the red laser light, the time required for the green laser light to travel from the side 100bb to the side 100ba is longer than the time required for the red laser light to travel from the side 100bb to the side 100ba. Thus, by calculating the time required for the laser light to travel from the side 100bb to the side 100ba based on the output of the light receiving element 100b in order to compare the calculated time, it is possible to detect the optical axis shift of each laser light in the vertical direction.

The second embodiment does not scan the red laser light to pass through the light receiving element 100b only once before the scanning of the blue and green laser lights, like the first embodiment. Namely, the second embodiment does not use the basic time defined by the output of the light receiving element 100b when the red laser light is scanned as mentioned above. Instead of this, the second embodiment uses a start time of the scanning by the MEMS mirror 10, for example, as the basic time. Namely, the second embodiment aligns output waveforms obtained by the control as shown in FIGS. 6A to 6C on a temporal axis, on the basis of the start time of the scanning, in order to detect the optical axis shift.

The basic time used in the second embodiment may be applied to the first embodiment. In this case, it is possible to omit the control for making the red laser light pass through the light receiving element 100a only once. Additionally, the basic time shown in the first embodiment maybe applied to the second embodiment. In this case, the light receiving element 100b may be configured to have a certain length in the vertical direction, and the blue and green laser lights may be scanned after the red laser light passes through the light receiving element 100b only once.

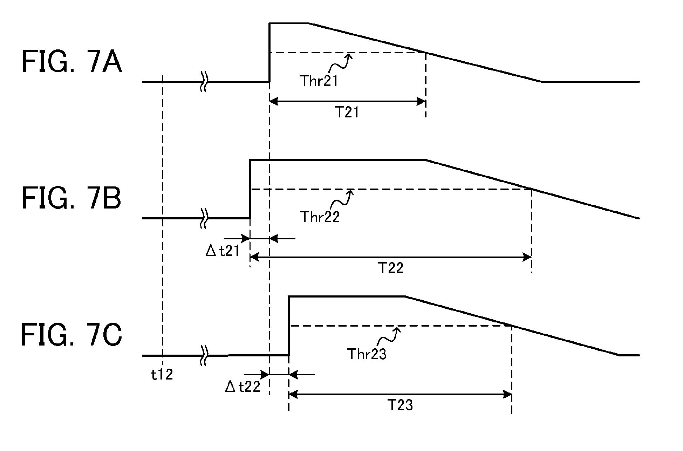

FIGS. 7A to 7C show output waveforms of the light receiving element 100b which are obtained by the control as shown in FIGS. 6A to 6C, respectively. In FIGS. 7A to 7C, a horizontal direction indicates time, and a vertical direction indicates an output value of the light receiving element 100b (corresponding to a power of the laser light which is detected by the light receiving element 100b). Additionally, by using basic time t12, the output waveforms obtained by the control as shown in FIGS. 6A to 6C are aligned on the temporal axis.

According to the output waveforms of the light receiving element 100b as to each laser light shown in FIGS. 7A to 7C, it can be understood that the output values gradually decrease after maximum output values are obtained during a certain time. The reason for obtaining the above output waveforms is as follows. Though the entire spot of each laser light is located in the light receiving element 100b when each laser light starts to pass through the light receiving element 100b, the spot of each laser light is gradually protruded from the light receiving element 100b after each laser light passes through the light receiving element 100b to some extent, and then the spot of each laser light completely gets out of the light receiving element 100b.

In the second embodiment, the video ASIC 3 in the image displaying device 1 uses a difference Δt21 between rising timing of the output obtained by the light receiving element 100b as to the red laser light and rising timing of the output obtained by the light receiving element 100b as to the blue laser light, as the difference of the optical axis in the horizontal direction between the red laser light and the blue laser light. The above rising timing corresponds to timing at which the laser light passes through the side 100bb of the light receiving element 100b. The difference Δt21 of the rising timing indicates that the rising timing of the output obtained by the light receiving element 100b as to the blue laser light is earlier than the rising timing of the output obtained by the light receiving element 100b as to the red laser light. In this case, the video ASIC 3 determines that the blue laser light shifts to the positive direction in the horizontal direction with respect to the red laser light. Similarly, the video ASIC 3 uses a difference Δt22 between the rising timing of the output obtained by the light receiving element 100b as to the red laser light and rising timing of the output obtained by the light receiving element 100b as to the green laser light, as the difference of the optical axis in the horizontal direction between the red laser light and the green laser light. The difference Δt22 of the rising timing indicates that the rising timing of the output obtained by the light receiving element 100b as to the green laser light is later than the rising timing of the output obtained by the light receiving element 100b as to the red laser light. In this case, the video ASIC 3 determines that the green laser light shifts to the negative direction in the horizontal direction with respect to the red laser light.

It is not limited to directly use the differences Δt21 and Δt22 as the optical axis shift in the horizontal direction. Values obtained by converting the differences Δt21 and Δt22 into lengths or angles may be used as the optical axis shift in the horizontal direction.

Additionally, in the second embodiment, the video ASIC 3 detects the optical axis shift in the vertical direction based on timing at which the output indicating that the laser light passes through the side 100ba of the light receiving element 100b is obtained from the light receiving element 100b. In this case, the video ASIC 3 uses timing at which the output of the light receiving element 100b decreases to a predetermined value, as the timing at which the laser light passes through the side 100ba. Then, the video ASIC 3 detects the optical axis shift in the vertical direction, based on time from when the output of the light receiving element 100b rises up (i.e., from when the laser light passes through the side 100bb of the light receiving element 100b) till when the output of the light receiving element 100b decreases to the predetermined value. In the examples shown in FIGS. 7A to 7C, as for the red, blue and green laser lights, the video ASIC 3 uses predetermined values Thr21, Thr22 and Thr23, respectively, which are used for determining the timing at which the laser light passes through the side 100ba. Therefore, as for the red, blue and green laser lights, the video ASIC 3 calculates time T21, T22 and T23, as the time from when the output of the light receiving element 100b rises up till when the output of the light receiving element 100b decreases to the predetermined value.

The predetermined values Thr21, Thr22 and Thr23 used for the red, blue and green laser lights are set to values being smaller than the maximum value of the output obtained when the light receiving element 100b receives the laser light, and are set to values capable of appropriately determining that the laser light passes through the side 100ba of the light receiving element 100b. Additionally, the predetermined values Thr21, Thr22 and Thr23 may be set to the same value or different values. For example, the predetermined values Thr21, Thr22 and Thr23 can be set in consideration of a difference in the laser power between the red, blue and green laser lights.

Afterward, the video ASIC 3 uses a difference between the time T21 obtained by the red laser light and the time T22 obtained by the blue laser light, as the difference of the optical axis in the vertical direction between the red laser light and the blue laser light. In this case, since the time T22 obtained by the blue laser light is longer than the time T21 obtained by the red laser light, the video ASIC 3 determines that the blue laser light shifts to the negative direction in the vertical direction with respect to the red laser light. Similarly, the video ASIC 3 uses a difference between the time T21 obtained by the red laser light and the time T23 obtained by the green laser light, as the difference of the optical axis in the vertical direction between the red laser light and the green laser light. In this case, since the time T23 obtained by the green laser light is longer than the time T21 obtained by the red laser light, the video ASIC 3 determines that the green laser light shifts to the negative direction in the vertical direction with respect to the red laser light.

It is not limited to directly use the above difference in the time as the optical axis shift in the vertical direction. Values obtained by converting the difference in the time into a length or an angle may be used as the optical axis shift in the vertical direction. For example, based on the tilt of the side 100ba of the light receiving element 100b and a scanning speed of the laser light, the obtained difference in the time can be converted into the length (as an example, a length defined by the spot size).

Similar to the first embodiment, by the above second embodiment, it is possible to appropriately detect the optical axis shift in the vertical direction during the normal drawing by the image displaying device 1, too. Since the first embodiment detects the optical axis shift in the vertical direction based on the laser power when the laser light passes through the side 100a1 of the light receiving element 100a, there is a possibility that the method in the first embodiment is affected by the difference in the spot sizes of the red, blue and green laser lights. However, since the second embodiment detects the optical axis shift in the vertical direction based on the timing at which the laser light passes through the side 100ba being inclined with respect to the scanning direction, it can be said that the method in the second embodiment is hardly affected by the difference in the spot size. This is because a manner of the decrease in the output of the light receiving element 100b when the laser light passes through the side 100ba tends to be substantially constant regardless of the spot sizes of the red, blue and green laser lights. Thus, compared with the first embodiment, the second embodiment can detect the optical axis shift in the vertical direction with accuracy.

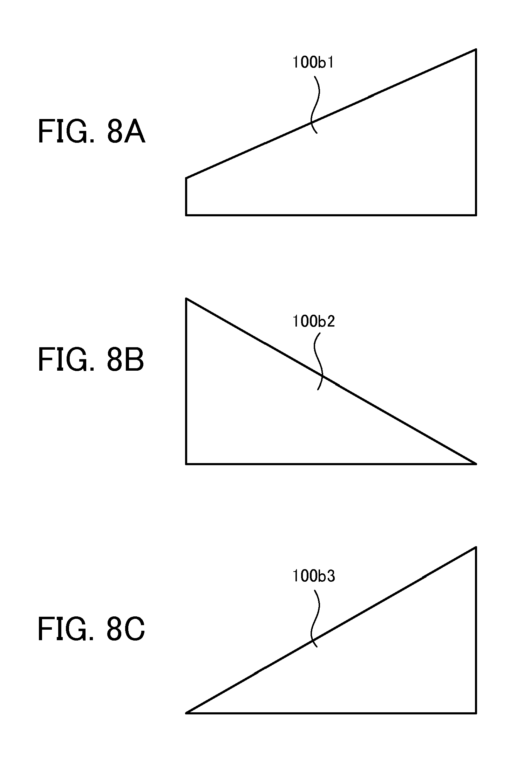

Here, a description will be given of modified examples of the light receiving element 100b according to the second embodiment, with reference to FIGS. 8A to 8C. FIG. 8A shows a light receiving element 100b1 which is obtained by horizontally inverting the light receiving element 100b. When the light receiving element 100b1 is used, the optical axis shift can be detected by the same method as the second embodiment if the laser light is scanned in the negative direction in the horizontal direction. FIG. 8B shows a light receiving element 100b2 which is obtained by removing the side 100bc being opposed to the side 100bb in the light receiving element 100b (see FIGS. 6A to 6C). Namely, the light receiving element 100b2 is formed in a triangular shape. When the light receiving element 100b2 is used, the optical axis shift can be detectedbythe same method as the second embodiment. FIG. 8C shows a light receiving element 100b3 which is obtained by horizontally inverting the light receiving element 100b2 shown in FIG. 8B. When the light receiving element 100b3 is used, the optical axis shift can be detected by the same method as the second embodiment if the laser light is scanned in the negative direction in the horizontal direction.

As shown in FIGS. 8A to 8C, as long as a light receiving element includes at least a side having the predetermined tilt with respect to the scanning direction, the second embodiment can be applied to light receiving elements formed in various shapes.

While the above second embodiment shows such an example that the optical axis shift is defined on the basis of the red laser light, the optical axis shift may be defined on the basis of the blue laser light or the green laser light. Additionally, while the above second embodiment shows such an example that the said embodiment is applied to the case that the optical axis shift shown in FIG. 3 occurs, needless to say, it is not limited to apply the second embodiment to the said case.

### (Third Embodiment)

Next, a description will be given of a third embodiment. The third embodiment uses a light receiving element formed in a staircase pattern (Hereinafter, the light receiving element 100 according to the second embodiment is referredto as "light receiving element 100c"), and detects the optical axis shift in the vertical direction based on an output change of the light receiving element 100c when each laser light passes through the light receiving element 100c. Concretely, the third embodiment detects the optical axis shift in the vertical direction based on timing at which the output of the light receiving element 100c becomes larger than or equal to a predetermined value when each laser light passes through the light receiving element 100c.

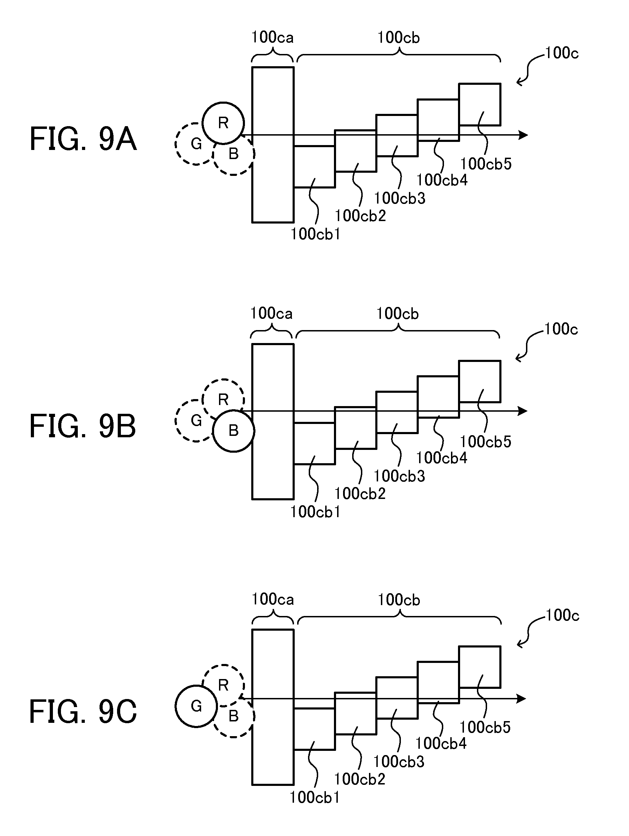

FIGS. 9A to 9C show diagrams for concretely explaining a method for detecting the optical axis shift according to the third embodiment. As shown in FIGS. 9A to 9C, the light receiving element 100c includes a light receiving unit 100ca formed in a rectangular shape, and a light receiving unit 100cb formed in a staircase pattern. The light receiving unit 100cb is formed in such a shape that five rectangles 100cb1 to 100cb5 being at least larger than the spot of the laser light are arranged in the staircase pattern. For example, level differences of the five rectangles 100cb1 to 100cb5 in the vertical direction are set to a length corresponding to about one-fourth of the spot size of the laser light. Additionally, as for the light receiving element 100c, the rectangles 100cb1 to 100cb5 of the light receiving unit 100cb is integrated, and the light receiving unit 100ca and the light receiving unit 100cb are also integrated. Furthermore, the light receiving element 100c is located at such a position that, when the normal scanning is performed in such a state that the optical axis of the laser light does not shift, the said laser light passes near the center of the light receiving unit 100cb in the vertical direction. As for the red, blue and green laser lights, it is assumed that the optical axis shifts as shown in FIG. 3 occur.

Firstly, as shown in FIG. 9A, in such a state that only the red laser light is emitted, the image displaying device 1 scans the red laser light so that the red laser light passes through the light receiving element 100c. Next, as shown in FIG. 9B, in such a state that only the blue laser light is emitted, the image displaying device 1 scans the blue laser light so that the blue laser light passes through the light receiving element 100c. Next, as shown in FIG. 9C, in such a state that only the green laser light is emitted, the image displaying device 1 scans the green laser light so that the green laser light passes through the light receiving element 100c. The MEMS control unit 8 in the image displaying device 1 performs the same scanning as the normal drawing.

Here, since the blue laser light shifts to the positive direction in the horizontal direction with respect to the red laser light, the blue laser light enters the light receiving element 100c via the light receiving unit 100ca before the red laser light enters the light receiving element 100c. Additionally, since the green laser light shifts to the negative direction in the horizontal direction with respect to the red laser light, the green laser light enters the light receiving element 100c via the light receiving unit 100ca after the red laser light enters the light receiving element 100c.

Meanwhile, since the light receiving unit 100cb of the light receiving element 100c is formed in the staircase pattern, the area of the spot of the laser light which is located in the light receiving unit 100cb changes in a step-by-step manner, when the laser light passes through the light receiving unit 100cb. In this case, since the positions of the red, blue and green laser lights in the vertical direction are different from each other, a manner in which the area of the spot being located in the light receiving unit 100cb changes is different in each laser light. For example, as for the red laser light, the area of the spot being located in the light receiving unit 100cb becomes a maximum when the red laser light passes through the rectangle 100cb5 of the light receiving unit 100cb. As for the blue laser light, the area of the spot being located in the light receiving unit 100cb becomes a maximum when the blue laser light passes through the rectangle 100cb2 of the light receiving unit 100cb. As for the green laser light, the area of the spot being located in the light receiving unit 100cb becomes a maximum when the green laser light passes through the rectangle 100cb3 of the light receiving unit 100cb. Thus, it is possible to detect the optical axis shift of each laser light in the vertical direction, based on the output change of the light receiving element 100c when the laser light passes through the light receiving unit 100cb.

Similar to the second embodiment, the third embodiment also uses the start time of the scanning by the MEMS mirror 10, for example, as the basic time. Namely, the third embodiment aligns output waveforms obtained by the control as shown in FIGS. 9A to 9C on a temporal axis, on the basis of the start time of the scanning, in order to detect the optical axis shift, too. The basic time shown in the first embodiment maybe applied to the third embodiment. In this case, the light receiving element 100c may be configured to have a certain length in the vertical direction, and the blue and green laser lights may be scanned after the red laser light passes through the light receiving element 100c only once.

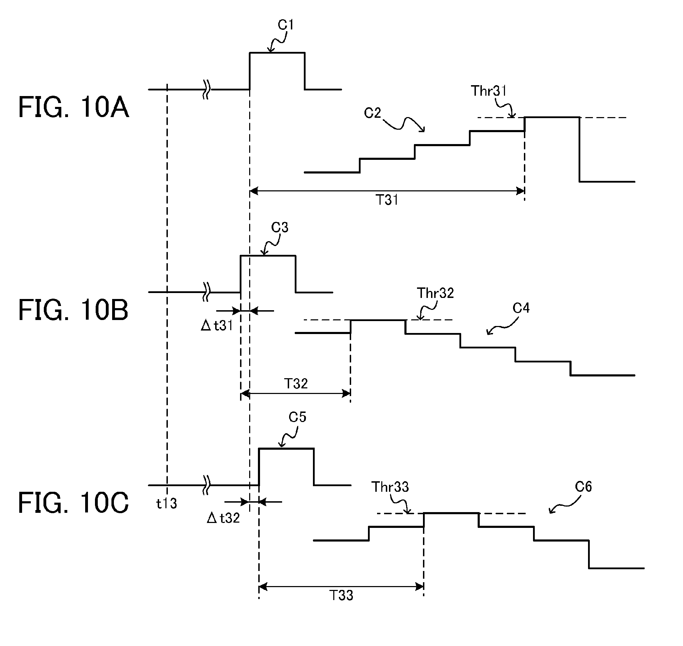

FIGS. 10A to 10C show output waveforms of the light receiving element 100c which are obtained by the control as shown in FIGS. 9A to 9C, respectively. In FIGS. 10A to 10C, a horizontal direction indicates time, and a vertical direction indicates an output value of the light receiving element 100c (corresponding to a power of the laser light which is detected by the light receiving element 100c). Additionally, byusingbasic time t13, the output waveforms obtained by the control as shown in FIGS. 9A to 9C are aligned on the temporal axis.

In FIG. 10A, an output of the light receiving element 100c shown by a reference numeral C1 indicates that an output when the red laser light passes through the light receiving unit 100ca of the light receiving element 100c, and an output of the light receiving element 100c shown by a reference numeral C2 indicates that an output when the red laser light passes through the light receiving unit 100cb of the light receiving element 100c. In FIG. 10B, an output of the light receiving element 100c shown by a reference numeral C3 indicates that an output when the blue laser light passes through the light receiving unit 100ca, and an output of the light receiving element 100c shown by a reference numeral C4 indicates that an output when the blue laser light passes through the light receiving unit 100cb. In FIG. 10C, an output of the light receiving element 100c shown by a reference numeral C5 indicates that an output when the green laser light passes through the light receiving unit 100ca, and an output of the light receiving element 100c shown by a reference numeral C6 indicates that an output when the green laser light passes through the light receiving unit 100cb. According to the outputs C2, C4 and C6, it can be understood that the outputs change in a step-by-step manner when the laser lights pass through the light receiving unit 100cb, and that the manners of the output changes are different in each laser light. In FIGS. 10A to 10C, as a matter of convenience of the explanations, the outputs C2, C4 and C6 at the time of passing through the light receivingunit 100cb are separated from the outputs C1, C3 and C5 at the time of passing through the light receiving unit 100ca.

In the third embodiment, the video ASIC 3 in the image displaying device 1 uses a difference Δt31 in a temporal direction between the output C1 obtained when the red laser light passes through the light receiving unit 100ca and the output C3 obtained when the blue laser light passes through the light receiving unit 100ca, as the difference of the optical axis in the horizontal direction between the red laser light and the blue laser light. The above difference in the temporal direction corresponds to a difference of the rising timing of the output of the light receiving element 100c. The difference Δt31 in the temporal direction indicates that the output C3 as to the blue laser light is earlier than the output C1 as to the red laser light. In this case, the video ASIC 3 determines that the blue laser light shifts to the positive direction in the horizontal direction with respect to the red laser light. Similarly, the video ASIC 3 uses a difference Δt32 in the temporal direction between the output C1 obtained when the red laser light passes through the light receiving unit 100ca and the output C5 obtained when the green laser light passes through the light receiving unit 100ca, as the difference of the optical axis in the horizontal direction between the red laser light and the green laser light. The difference Δt32 in the temporal direction indicates that the output C5 as to the green laser light is later than the output C1 as to the red laser light. In this case, the video ASIC 3 determines that the green laser light shifts to the negative direction in the horizontal direction with respect to the red laser light.

It is not limited to directly use the differences Δt31 and Δt32 in the temporal direction, as the optical axis shift in the horizontal direction. Values obtained by converting the differences Δt31 and Δt32 into lengths or angles may be used as the optical axis shift in the horizontal direction.

Additionally, in the third embodiment, the video ASIC 3 detects the optical axis shift in the vertical direction, based on the timing at which the output of the light receiving element 100c becomes larger than or equal to the predetermined value when each laser light passes through the light receiving unit 100cb. The timing at which the output of the light receiving element 100c becomes larger than or equal to the predetermined value corresponds to timing at which the area of the spot being located in the light receiving unit 100cb becomes the maximum, for example. Then, the video ASIC 3 detects the optical axis shift in the vertical direction, based on time from when the output of the light receiving element 100c rises up (i.e., from when the laser light passes through the light receiving unit 100ca of the light receiving element 100c) till when the output of the light receiving element 100c becomes larger than or equal to the predetermined value. In the examples shown in FIGS. 10A to 10C, as for the red, blue and green laser lights, the video ASIC 3 uses predetermined values Thr31, Thr32 and Thr33, respectively. Thus, as for the red, blue and green laser lights, the video ASIC 3 calculates time T31, T32 and T33, as the time from when the output of the light receiving element 100c rises up till when the output of the light receiving element 100c becomes larger than or equal to the predetermined value.

The predetermined values Thr31, Thr32 and Thr33 used for the red, blue and green laser lights are set based on an output value of the light receiving element 100c which is obtained when almost the entire spot is located in one rectangle included in the light receiving unit 100cb, for example. Additionally, the predetermined values Thr31, Thr32 and Thr33 may be set to the same value or different values. For example, the predetermined values Thr31, Thr32 and Thr33 can be set in consideration of the difference in the laser power between the red, blue and green laser lights.

Afterward, the video ASIC 3 uses a difference between the time T31 obtained by the red laser light and the time T32 obtained by the blue laser light, as the difference of the optical axis in the vertical direction between the red laser light and the blue laser light. In this case, since the time T32 obtained by the blue laser light is longer than the time T31 obtained by the red laser light, the video ASIC 3 determines that the blue laser light shifts to the negative direction in the vertical direction with respect to the red laser light. Similarly, the video ASIC 3 uses a difference between the time T31 obtained by the red laser light and the time T33 obtained by the green laser light, as the difference of the optical axis in the vertical direction between the red laser light and the green laser light. In this case, since the time T33 obtained by the green laser light is longer than the time T31 obtained by the red laser light, the video ASIC 3 determines that the green laser light shifts to the negative direction in the vertical direction with respect to the red laser light.

It is not limited to directly use the above differences in the time as the optical axis shift in the vertical direction. Values obtained by converting the differences in the time into lengths or angles may be used as the optical axis shift in the vertical direction. For example, a rectangle in the five rectangles 100cb1 to 100cb5 which appropriately covers the spot of each laser light (i.e., such a rectangle that the area of the spot being located in the light receiving unit 100cb is a maximum) is specified based on the timing at which the output of the light receiving element 100c becomes larger than or equal to the predetermined value when each laser light passes through the light receiving unit 100cb, and then a length (as an example, a length defined by the spot size) corresponding to the level difference of the specified rectangle in the vertical direction as to each laser light can be used as the optical axis shift in the vertical direction.

Similar to the first and second embodiments, by the above third embodiment, it is possible to appropriately detect the optical axis shift in the vertical direction during the normal drawing by the image displaying device 1, too. As mentioned above, the third embodiment specifies such a rectangle that the area of the spot being located in the light receiving unit 100cb is the maximum in the five rectangles 100cb1 to 100cb5, based on the output change when each laser light passes through the light receiving unit 100cb, and then detects the optical axis shift in the vertical direction based on the specified rectangle. Therefore, by using the level difference of the specified rectangle in the vertical direction as to each laser light, as the optical axis shift in the vertical direction, it is possible to roughly detect the optical axis shift. Hence, compared with the first and second embodiments, the third embodiment can detect the optical axis shift in the vertical direction by a relatively simple processing. Namely, it becomes possible to reduce a processing load as to the detection of the optical axis shift.

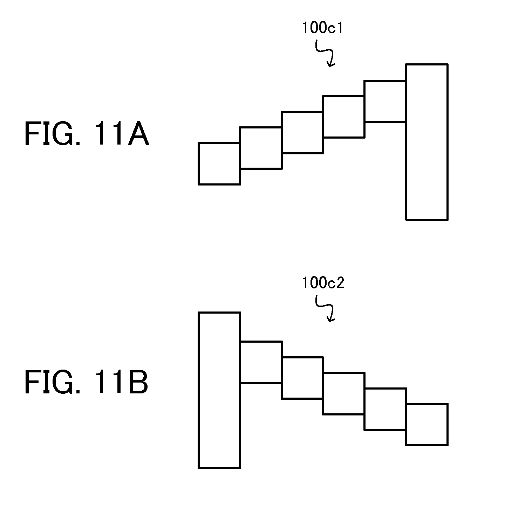

Here, a description will be given of modified examples of the light receiving element 100c according to the thirdembodiment, with reference to FIGS. 11A and 11B. FIG. 11A shows a light receiving element 100c1 which is obtained by arranging the light receiving unit 100ca of the light receiving element 100c on the right side of the light receiving unit 100cb. When the light receiving element 100c1 is used, the optical axis shift can be detected by the same method as the third embodiment if the laser light is scanned in the negative direction in the horizontal direction. FIG. 11B shows a light receiving element 100c2 which is obtained by vertically inverting only the light receiving unit 100cb of the light receiving element 100c. When the light receiving element 100c2 is used, the optical axis shift can be detected by the same method as the third embodiment.

As mentioned above, the third embodiment can be applied to such a configuration that the light receiving unit 100ca is located on the right side or the left side, and can be applied to such a configuration that the light receiving unit 100cb is inclined upward to the right or downward to the right. Additionally, as another example, the light receiving unit 100ca and the light receiving unit 100cb can be configured as different light receiving elements, and the rectangles 100cb1 to 100cb5 of the light receiving unit 100cb can be configured as different light receiving elements. As still another example, without arranging the rectangles 100cb1 to 100cb5 of the light receiving unit 100cb in the staircase pattern, the rectangles 100cb1 to 100cb5 canbe located at arbitrarypositions. Concretely, the rectangles 100cb1 to 100cb5 can be located at such a position that the rectangles 100cb1 to 100cb5 do not overlap each other in both the horizontal direction and the vertical direction. When the above light receiving element is used, by sorting the obtained output waveforms in accordance with the positions of the rectangles 100cb1 to 100cb5, the optical axis shift can be detected by the same method as the above third embodiment.

While the above third embodiment shows such an example that the optical axis shift is defined on the basis of the red laser light, the optical axis shift may be defined on the basis of the blue laser light or the green laser light. While the above third embodiment shows such an example that the said embodiment is applied to the case that the optical axis shift shown in FIG. 3 occurs, needless to say, it is not limited to apply the third embodiment to the said case.

### [Modified Example]

While the above embodiments show such an example that the present invention is applied to the image displaying device 1 which emits the three laser lights (the red, blue and green laser lights), it is not limited to this. For example, the present invention can be applied to an image displaying device which emits more than three laser lights, or an image displaying device which emits two laser lights, too.

### INDUSTRIAL APPLICABILITY

This invention can be applied to video apparatuses using RGB lasers, such as a laser projector, a head-up display and a head-mounted display, for example.

### DESCRIPTION OF REFERENCE NUMBERS

- 1: Image Displaying Device
- 3: Video ASIC
- 7: Laser Driver ASIC
- 8: MEMS Control Unit
- 9: Laser Light Source Unit
- 100, 100a, 100b, 100c: Light Receiving Element

## Claims

1. An image displaying device, comprising:
at least two laser light source units which emit at least two laser lights having different wavelengths from each other;
a scanning unit which scans the laser lights emitted from the laser light source units;
a light receiving element which receives each of the at least two laser lights; and
a detecting unit which obtains an output of the light receiving element when the said light receiving element receives a laser light in the at least two laser, by making the scanning unit scan the said laser light, and thereby obtains outputs as to all of the at least two laser lights;
wherein the light receiving element has a side extending in a scanning direction of the scanning unit, and
wherein the detecting unit detects an optical axis shift in a direction perpendicular to the scanning direction, based on an output value from the light receiving element when each of the at least two laser lights passes through the side extending in the scanning direction.

2. The image displaying device according to claim 1,
wherein the detecting unit normalizes the output value from the light receiving element when each of the at least two laser lights passes through the side extending in the scanning direction, by a maximum value of the output value obtained when the light receiving element receives each of the at least two laser lights, and then detects the optical axis shift in the direction perpendicular to the scanning direction based on a normalized value.

3. The image displaying device according to claim 1 or 2,
wherein the light receiving element is formed in a rectangular shape.

4. An image displaying device, comprising:
at least two laser light source units which emit at least two laser lights having different wavelengths from each other;
a scanning unit which scans the laser lights emitted from the laser light source units;
a light receiving element which receives each of the at least two laser lights; and
a detecting unit which obtains an output of the light receiving element when the said light receiving element receives a laser light in the at least two laser, by making the scanning unit scan the said laser light, and thereby obtains outputs as to all of the at least two laser lights;
wherein the light receiving element is formed in such a shape that an area of a spot of the laser light with which the light receiving element is irradiated changes in accordance with a progress of scanning by the scanning unit, and
wherein the detecting unit detects an optical axis shift in a direction perpendicular to a scanning direction of the scanning unit, based on a change of an output from the light receiving element when each of the at least two laser lights passes through the light receiving element.

5. The image displaying device according to claim 4,
wherein the light receiving element includes a side having a predetermined tilt with respect to the scanning direction, and
wherein the detecting unit detects the optical axis shift in the direction perpendicular to the scanning direction, based on timing at which an output indicating that each of the at least two laser lights passes through the side having the predetermined tilt is obtained from the light receiving element.

6. The image displaying device according to claim 5,
wherein the detecting unit uses timing at which a output value of the light receiving element becomes a predetermined value when each of the at least two laser lights passes through the light receiving element, as the timing at which the output indicating that each of the at least two laser lights passes through the side having the predetermined tilt is obtained from the light receiving element, and
wherein the detecting unit detects the optical axis shift in the direction perpendicular to the scanning direction, based on the predetermined tilt and the timing at which the output value of the light receiving element becomes the predetermined value.

7. The image displaying device according to claim 4,
wherein the light receiving element is formed in such a shape that multiple rectangles being at least larger than spots of the at least two laser lights are arranged in a staircase pattern, and
wherein the detecting unit detects the optical axis shift in the direction perpendicular to the scanning direction, based on timing at which a output value of the light receiving element becomes larger than or equal to a predetermined value when each of the at least two laser lights passes through the light receiving element.

8. The image displaying device according to any one of claims 1 to 7,
wherein the light receiving element is provided at a position corresponding to a predetermined area which is located in a scanning area by the scanning unit, and which is located outside a drawing area by the image displaying device.

9. The image displaying device according to any one of claims 1 to 8,
wherein the detecting unit further detects an optical axis shift in the scanning direction, based on timing at which an output indicating that each of the at least two laser lights passes through a side of the light receiving element which extends in a direction perpendicular to the scanning direction is obtained from the light receiving element.

10. The image displaying device according to any one of claims 1 to 9,
wherein, before the optical axis shift is detected, the detecting unit obtains timing at which an output indicating that a laser light in the at least two laser lights passes through a side of the light receiving element which extends in a direction perpendicular to the scanning direction is obtained from the light receiving element, by making the scanning unit scan the said laser light, and
wherein the detecting unit detects the optical axis shift by using the obtained timing as a basis for comparing the output of the light receiving element which is obtained when each of the at least two laser lights passes through the light receiving element.

11. The image displaying device according to any one of claims 1 to 9,
wherein the detecting unit detects the optical axis shift by using timing of start of a scanning by the scanning unit, as a basis for comparing the output of the light receiving element which is obtained when each of the at least two laser lights passes through the light receiving element.

12. An image displaying device, comprising:
a first light source which emits a first laser light;
a second light source which emits a second laser light having a different wavelength from the first laser light;
a scanning unit which scans the first laser light and second laser light;
a light receiving element which has a side extending in a scanning direction for scanning the first laser light and second laser light by the scanning unit, and receives each of the first laser light and second laser light so as to output a signal in accordance with amount of a received light; and
an optical axis shift detecting unit which detects an optical axis shift in a direction perpendicular to the scanning direction, based on an output value from the light receiving element when each of the first laser light and second laser light passes along the side of the light receiving element which extends in the scanning direction.

13. The image displaying device according to claim 12, wherein the optical axis shift detecting unit detects the optical axis shift based on an output value from the light receiving element in such a state that only a part of the first laser light or only a part of the second laser light is received by the light receiving element.

14. The image displaying device according to claim 13, wherein the optical axis shift detecting unit corresponds to an outermost periphery part of the light receiving element which is scanned by the first light source and the second light source.

15. An image displaying device, comprising:
a first light source which emits a first laser light;
a second light source which emits a second laser light having a different wavelength from the first laser light;
a scanning unit which scans the first laser light and second laser light;
a light receiving element which has such a shape that an area of a spot formed on a light receiving surface by the first laser light and the second laser light changes in accordance with a progress of scanning in a predetermined direction by the scanning unit, and receives each of the first laser light and second laser light so as to output a signal in accordance with amount of a received light; and
an optical axis shift detecting unit which detects an optical axis shift in a direction perpendicular to a scanning direction, based on an output value from the light receiving element when each of the first laser light and second laser light passes along a side of the light receiving element which extends in the scanning direction.

16. The image displaying device according to claim 15, wherein the light receiving element has a side non-parallel to the scanning direction of the scanning unit.

17. An image displaying device, comprising:
a first light source which emits a first laser light;
a second light source which emits a second laser light having a different wavelength from the first laser light;
a scanning unit which scans the first laser light and second laser light in a predetermined direction multiple times;
a light receiving element which receives each of the first laser light and second laser light so as to output a signal in accordance with amount of a received light; and
an optical axis shift detecting unit which detects an optical axis shift in a direction perpendicular to a scanning direction, based on a difference between an output value from the light receiving element at the time of the n-th scanning of the first laser light and an output value from the light receiving element at the time of the n-th scanning of the second laser light.
